# DEMANDE DE BREVET EUROPEEN

(11) **EP 0 856 681 A1**
(43) Date de publication de la demande: **05.08.1998**
(21) Numéro de dépôt: 98200047.3
(22) Date de dépôt: 09.01.1998
(51) Int. Cl.: F16F 7/12, B60R 19/34

(54) **Dispositif d'absorption d'énergie**

(30) Priorité: 20.01.1997 BE 9700061
(71) Demandeur: RECHERCHE ET DEVELOPPEMENT DU GROUPE COCKERILL SAMBRE, en abrégé: RD-CS, 4000 Liège (BE)
(72) Inventeur: Valentin, Thibaut, 5100 Namur (BE)
(74) Mandataire: Callewaert, Jean

(57) **Abrégé**

Dispositif d'absorption d'énergie provenant d'un impact avec un obstacle, ce dispositif étant monté entre un pare-chocs et l'avant ou l'arrière d'un véhicule automobile et comprenant au moins un longeron creux en métal s'étendant transversalement au pare-chocs, ledit longeron présentant une section perpendiculaire à son axe ayant sensiblement l'allure d'une croix à quatre branches creuses sensiblement identiques s'étendant deux par deux dans le prolongement l'une de l'autre et dont leurs axes radiaux dans la section susdite forment entre eux un angle de 90°.

## Description

La présente invention est relative à un dispositif d'absorption d'énergie provenant d'un impact avec un obstacle, ce dispositif étant monté entre un pare-chocs et l'avant ou l'arrière d'un véhicule automobile et comprenant un longeron creux en métal s'étendant transversalement au pare-chocs.

La sécurité est actuellement le principal souci des constructeurs automobiles. Ce souci de sécurité se traduit par des exigences essentielles : il faut, d'une part, limiter les déformations subies par l'habitacle du véhicule et, d'autre part, les accélérations subies par les occupants doivent rester tolérables pour l'organisme. Ces exigences ont amené les ingénieurs des bureaux de conception à doter les véhicules automobiles du futur de cellules déformables situés à l'avant et à l'arrière du véhicule et destinées à absorber l'énergie cinétique de ces dernières en cas d'impact. Dans ces cellules, les dispositifs d'absorption d'énergie situés entre le pare-chocs et le châssis du véhicules, jouent un rôle primordial. Ces dispositifs doivent répondre à plusieurs conditions apparemment contradictoires. En effet, ils doivent, d'une part, rester non déformés pour un impact correspondant à une vitesse de 7 km par heure, et, d'autre part, constituer la seule zone déformée jusqu'à une vitesse de 15 km par heure, tout en ne soumettant pas l'habitacle à une décélération trop importante.

Les dispositifs d'absorption connus conçus pour absorber une énergie donnée en limitant leur force de déformation et donc la décélération, s'ils remplissent correctement les critères de sécurité, sont très chers et leur poids est relativement important. Pour résoudre ces problèmes les solutions suivantes ont été proposées :
- des dispositifs d'absorption d'énergie en aluminium qui permettent de diminuer le poids, mais leurs propriétés d'absorption d'énergie sont généralement peu contrôlables et souvent insuffisantes, tandis que les coûts de matière et de fabrication restent importants ;
- les dispositifs d'absorption d'énergie en acier à géométrie relativement complexe qui remplissent les critères de sécurité et permettent de diminuer légèrement le poids, mais leur coût de fabrication reste généralement très important ;
- les dispositifs d'absorption faisant intervenir des liquides ou des élastomères, dont le poids est généralement le principal inconvénient.

Un des buts essentiels de la présente invention est de présenter un nouveau type de dispositif d'absorption d'énergie qui permet de remédier aux inconvénients des dispositifs de ce genre connus, à savoir, en même temps, maximiser les critères d'absorption d'énergie et minimiser les prix de revient.

Ainsi, le dispositif d'absorption d'énergie, suivant l'invention, comprend au moins un longeron présentant une section perpendiculaire à son axe ayant sensiblement l'allure d'une croix à quatre branches creuses, de préférence sensiblement identiques, s'étendant deux par deux dans le prolongement l'une de l'autre, dont leurs axes radiaux forment entre eux un angle de 90°.

Avantageusement, le longeron précité présente deux plans de symétrie passant par son axe et perpendiculaires l'un par rapport à l'autre.

Suivant une forme de réalisation particulière de l'invention, chacune des branches du longeron présente une section perpendiculaire à l'axe de ce dernier qui s'étend entre deux cercles dont les centres se trouvent sur ledit axe, un cercle inscrit et un cercle circonscrit, le cercle inscrit ayant un diamètre compris entre 30 et 70 mm, le cercle circonscrit ayant un diamètre de 80 à 140 mm.

L'invention concerne également un pare-chocs pourvu d'un dispositif d'absorption d'énergie, tel que décrit ci-dessus, ainsi qu'un véhicule automobile équipé d'un tel pare-chocs.

D'autres détails et particularités de l'invention ressortiront de la description donnée ci-après, à titre d'exemple non limitatif, de quelques formes de réalisation particulières de l'invention avec référence aux dessins annexés.

La figure 1 est une représentation très schématique d'une première forme de réalisation d'un pare-chocs pourvu d'un dispositif d'absorption d'énergie suivant l'invention.

La figure 2 est une représentation analogue à celle de la figure 1 d'une deuxième forme de réalisation d'un tel pare-chocs.

La figure 3 est une vue en perspective d'une partie d'une première forme de réalisation d'un dispositif d'absorption d'énergie suivant la présente invention.

La figure 4 est une représentation schématique d'une section perpendiculaire à l'axe du longeron de la forme de réalisation du dispositif montré à la figure 3.

La figure 5 est une vue en élévation montrant schématiquement une partie d'un longeron suivant la figure 3 qui a subi une déformation provenant d'un impact avec un obstacle.

La figure 6 est un diagramme montrant en ordonnée la force d'impact et en abscisse le raccourcissement d'un longeron d'un dispositif d'absorption d'énergie sur l'effet de cette force.

La figure 7 est une section transversale d'un longeron suivant une deuxième forme de réalisation d'un dispositif d'absorption d'énergie.

Dans les différentes figures, les mêmes chiffres de référence concernent des éléments identiques ou analogues.

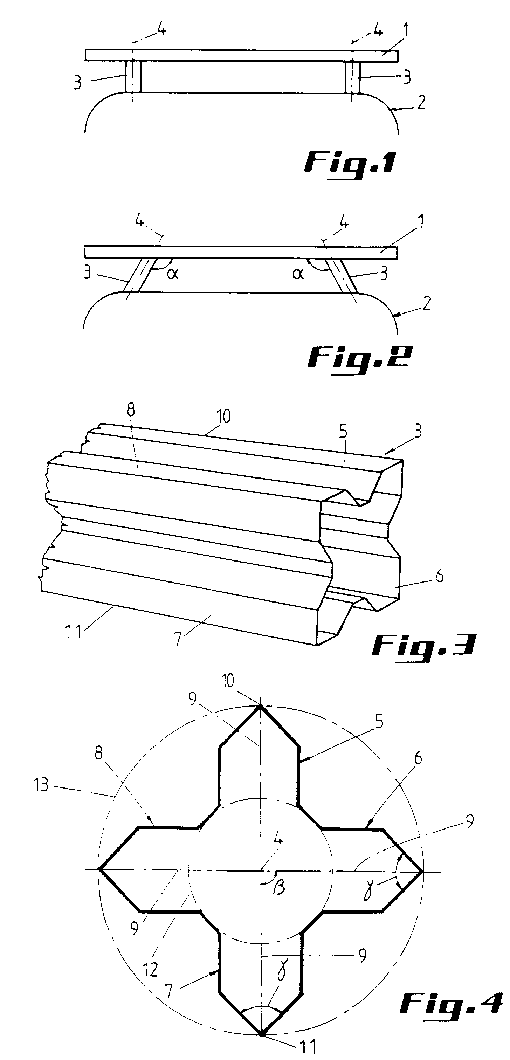

La figure 1 montre un pare-chocs 1 monté à l'avant ou à l'arrière d'un véhicule automobile 2 par l'intermédiaire de deux longerons creux 3 s'étendant chacun à une même distance des extrémités du pare-chocs et avec leur axe 4 perpendiculaire au pare-chocs 1. Ces deux longerons 3 font partie d'un dispositif d'absorption d'énergie.

La figure 2 concerne une deuxième forme de réalisation d'un dispositif d'absorption d'énergie, qui se distingue de celui illustré par la figure 1 en ce sens que les axes 4 des longerons 3 sont inclinés l'un vers l'autre d'un même angle α, contrairement à ce qui est le cas dans la forme de réalisation suivant la figure 1 où ces deux axes 4 sont parallèles l'un à l'autre et perpendiculaires au pare-chocs 1.

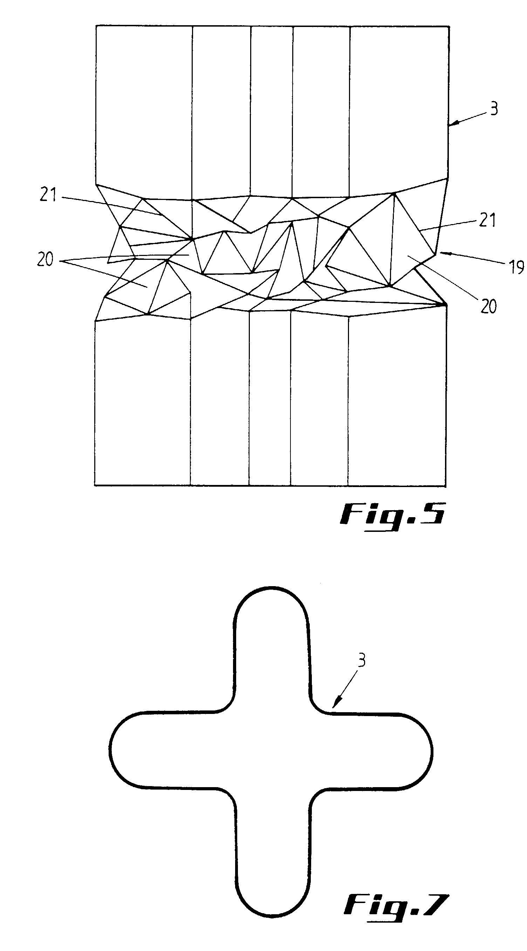

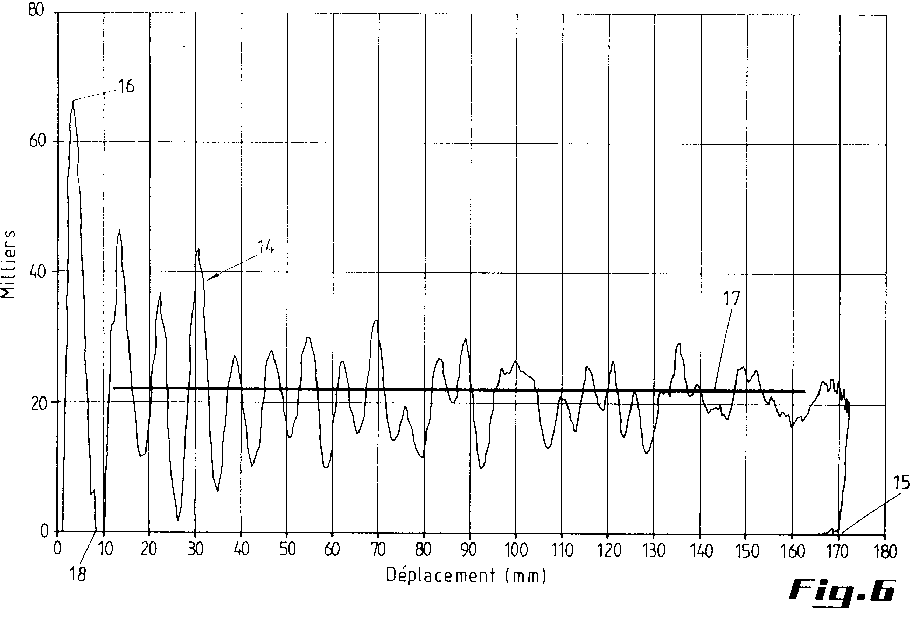

Le longeron, tel qu'illustré par la figure 3, présente, comme il résulte plus clairement de la figure 4, une section perpendiculaire à son axe 4 ayant sensiblement l'allure d'une croix à quatre branches creuses identiques 5 à 8 s'étendant deux par deux dans le prolongement l'une de l'autre et dont leurs axes radiaux 9 forment entre eux un angle β de 90°.

De plus, ce longeron 3 présente deux plans de symétrie passant par son axe 4 et perpendiculaire l'un par rapport à l'autre. De tels plans peuvent, par exemple, s'étendre suivant les axes radiaux 9 montrés à la figure 4.

Par ailleurs, la surface de chacune des branches 5 à 8 présente au moins trois changements de direction dans un plan perpendiculaire à l'axe du longeron 3.

Ainsi, dans la forme de réalisation particulière de l'invention montrée aux figures 3 et 4, l'extrémité libre des quatre branches précitées présente une forme pointue d'un angle γ de 75 à 150°, de préférence supérieur à 90°, comme montré à la figure 4.

Ces longerons peuvent être réalisés par pliage, surtout pour de petites séries, mais, d'une manière particulièrement avantageuse, la production de ceux-ci peut sans aucun problème se faire par profilage continu, ce qui permet de réduire considérablement les frais de fabrication.

La forme de réalisation, telle que montrée aux figures 3 et 4 a été réalisée par pliage ou emboutissage. Dans ce cas, le longeron 3 est constitué de deux pièce identiques, 3a et 3b, qui sont assemblées par points de soudure ou par un cordon de soudure continu ou encore par un adhésif à l'endroit des deux arêtes diamétralement opposées 10 et 11, de manière à obtenir ainsi un tout fermé.

D'excellents résultats ont été obtenus en faisant usage d'un longeron 3 en acier présentant une paroi d'une épaisseur comprise entre 0,4 et 1,5 mm, de préférence de l'ordre de 0,7 à 1 mm. Il s'agit plus particulièrement d'un acier présentant une limite d'élasticité de l'ordre de 250 MPa à 1000 MPa et, de préférence, supérieur à 300 MPa.

Comme encore montré à la figure 4, chacune des branches 5, 6, 7 et 8 s'étend entre deux cylindres virtuels, dont l'axe coïncide avec celui du longeron 3, un cylindre inscrit 12 et un cylindre circonscrit 13. Le cylindre inscrit 12 a un diamètre compris entre 30 et 70 mm, tandis que le cylindre circonscrit 13 a une diamètre de 80 à 140 mm.

La figure 5 montre schématiquement la déformation 19 que le longeron 3 de la figure 3 a subi après un impact suivant la direction de son axe 4 avec un obstacle.

Suivant l'invention, il a été constaté que les dimensions et le nombre de plis ou fronces 20 formés lors de la déformation axiale du longeron a une très grande influence sur la quantité d'énergie absorbée.

Ainsi, il s'est avéré qu'au plus grand est le nombre de plis 20 par unité de longueur du longeron, au plus grande est la quantité d'énergie absorbée. En effet, les endroits de pliage sont des zones d'absorption privilégiées, étant donné qu'au moment du pliage, vient s'additionner un mode de traction qui s'étend sur toute la ligne de pliage 21 des plis et absorbe une quantité non négligeable d'énergie.

Contrairement à ce que l'on pourrait supposer, l'énergie absorbée n'est pas du tout proportionnelle à l'épaisseur des parois du longeron. Au contraire, en diminuant l'épaisseur de la paroi du longeron on peut obtenir un nombre de lignes de pliage plus élevé et donc une augmentation considérable de la quantité d'énergie absorbée.

La figure 6 représente un diagramme avec une courbe 14 montrant le déplacement ou raccourcissement maximum 15 du longeron 3, la force maximum d'initiation 16 et la force moyenne 17.

La valeur négative du deuxième pic 18 de cette courbe 14 s'explique par des phénomènes vibratoires dans l'appareil utilisé pour effectuer le test.

Les autres paramètres sont obtenus par intégration des grandeurs primaires en faisant usage de la formule: énergie = force x déplacement.

Ainsi, Eimpact est l'intégrale de la force sur la totalité du déplacement, ce qui correspond à l'énergie cinétique juste avant l'impact.

E150 est l'énergie absorbée par la structure sur 150 mm de déformation et correspond à la surface comprise sous la courbe 14 jusqu'à un déplacement de 150 mm.

En considérant la courbe 14 du diagramme de la figure 6, on constate que le dispositif d'absorption est soumis à une force et donc une décélération très importante en début de déformation et cela pendant un temps très court. Ceci pourrait donc, dans certains cas, présenter un problème qui, suivant l'invention, peut être résolu de différentes manières.

Ainsi, il peut être utile que le longeron 3 présente, sur une certaine partie de sa longueur, une zone périphérique de plus faible résistance que l'autre partie du longeron.

Cette zone de faible résistance peut, par exemple, être ajourée ou être formée d'une autre matière que l'acier dont la résistance est inférieure à celle de l'acier. Une autre solution encore serait qu'au moins la paroi, à une de ses extrémités, présente une épaisseur inférieure à celle de l'autre partie du longeron.

On pourrait encore concevoir un longeron qui a été prédéformé sur au moins une partie périphérique de sa longueur d'une manière telle que cette partie prédéformée puisse encore absorber de l'énergie lors d'un impact dans le sens de la longueur du longeron.

La figure 7 concerne une deuxième forme de réalisation d'un dispositif d'absorption d'énergie suivant l'invention qui se distingue par rapport au précédent par le fait que les extrémités des branches 5, 6, 7 et 8 sont bombées. Ainsi, dans cette forme de réalisation, les extrémités des branches présentent donc un changement de direction continu dans un plan perpendiculaire à l'axe 4 du longeron 3.

Dans une troisième forme de réalisation non représentée, le longeron 3 présente une section perpendiculaire à son axe 4 ayant l'allure d'une croix de Malte.

Dans une autre variante encore, on pourrait faire usage d'un longeron présentant une section perpendiculaire à son axe variable et de préférence décroissante à partir de l'une de ses extrémités vers son autre extrémité. Une telle forme de réalisation n'a, toutefois, pas été représentée aux figures.

Il est bien entendu que l'invention n'est nullement limitée aux formes de réalisation décrites ci-dessus et montrées aux dessins annexés. C'est ainsi que le longeron ne doit pas nécessairement être réalisé en acier, mais que tout autre métal approprié, tel que de l'aluminium, pourrait être utilisé en fonction de l'application envisagée du dispositif d'absorption d'énergie.

## Revendications

1. Dispositif d'absorption d'énergie provenant d'un impact avec un obstacle, ce dispositif étant monté entre un pare-chocs et l'avant ou l'arrière d'un véhicule automobile et comprenant au moins un longeron creux en métal s'étendant transversalement au pare-chocs, caractérisé en ce que ce longeron présente une section perpendiculaire à son axe ayant sensiblement l'allure d'une croix à quatre branches creuses sensiblement identiques s'étendant deux par deux dans le prolongement l'une de l'autre et dont leurs axes radiaux dans la section susdite forment entre eux un angle de 90°.

2. Dispositif suivant la revendication 1, caractérisé en ce que le longeron précité présente deux plans de symétrie passant par son axe et perpendiculaires l'un par rapport à l'autre.

3. Dispositif suivant l'une ou l'autre des revendications 1 et 2, caractérisé en ce que l'extrémité libre des quatre branches du longeron précité présente une forme bombée ou pointue d'un angle de 75 à 150°, de préférence supérieur à 90°.

4. Dispositif suivant l'une quelconque des revendications 1 à 3, caractérisé en ce que la surface de chacune des branches présente au moins trois changements de direction dans un plan perpendiculaire à l'axe du longeron.

5. Dispositif suivant l'une quelconque des revendications 1 à 4, caractérisé en ce que le longeron est constitué d'une seule pièce profilée et fermé par soudure.

6. Dispositif suivant l'une quelconque des revendications 1 à 4, caractérisé en ce que le longeron est formé d'une ou de plusieurs parties de tôle pliées ou embouties soudées à leurs bords longitudinaux en regard de manière à obtenir un tout fermé.

7. Dispositif suivant l'une quelconque des revendications 1 à 6, caractérisé en ce que le longeron présente une paroi d'une épaisseur comprise entre 0,4 et 1,50 mm, de préférence de l'ordre de 0,7 à 1 mm.

8. Dispositif suivant l'une quelconque des revendications 1 à 7, caractérisé en ce que le longeron est réalisé en acier.

9. Dispositif suivant la revendication 8, caractérisé en ce que le longeron est réalisé en un acier présentant une limite d'élasticité de l'ordre de 250 MPa à 1000.MPa, et de préférence de 300 MPa à 700 MPa.

10. Dispositif suivant l'une quelconque des revendications 1 à 9, caractérisé en ce que chacune des branches du longeron présente une section perpendiculaire à l'axe de ce dernier qui s'étend entre deux cercles dont leur centre se trouve sur ledit axe, un cercle inscrit et un cercle circonscrit, le cercle inscrit ayant un diamètre compris entre 30 et 70 mm, le cercle circonscrit ayant un diamètre de 80 à 140 mm.

11. Dispositif suivant l'une quelconque des revendications 1 à 10, caractérisé en ce que le longeron présente, sur une certaine partie de sa longueur, une zone périphérique de plus faible résistance que l'autre partie du longeron.

12. Dispositif suivant la revendication 11, caractérisé en ce que la zone de faible résistance est ajourée.

13. Dispositif suivant l'une ou l'autre des revendications 11 et 12, caractérisé en ce que la paroi du longeron présente à au moins une de ses extrémités une épaisseur inférieure à celle de l'autre partie du longeron.

14. Dispositif suivant l'une quelconque des revendications 1 à 13, caractérisé en ce que le longeron, sur au moins une certaine partie périphérique de sa longueur, est partiellement déformé dans la direction de son axe.

15. Dispositif suivant l'une quelconque des revendications 1 à 14, caractérisé en ce que le longeron présente une section perpendiculaire à son axe variable et de préférence décroissante à partir d'une de ses extrémités vers son autre extrémité.

16. Dispositif suivant l'une quelconque des revendications 1 à 15, caractérisé en ce que le longeron contient de la mousse d'une matière plastique, de préférence rigide, telle que de la mousse de polyuréthanne à haute densité.

17. Pare-chocs monté sur un dispositif faisant l'objet d'une des revendications 1 à 16.

18. Véhicule automobile équipé d'au moins un pare-chocs faisant l'objet de la revendication 17.
